# NEUE EUROPÄISCHE PATENTSCHRIFT

(11) **EP 1 132 275 B2**
(45) Veröffentlichungstag und Bekanntmachung des Hinweises auf die Entscheidung über den Einspruch: **13.06.2012**
(45) Hinweis auf die Patenterteilung: 04.02.2004
(21) Anmeldenummer: 01100146.8
(22) Anmeldetag: 16.01.2001
(51) Int. Cl.: B60T 15/04

(54) **Sperreinrichtung für handbetätigbare Ventile, insbesondere für Ventile von Feststellbremsen in Nutzfahrzeugen**
Hand operated valve lock device, especially for commercial vehicle parking brake valve
Dispositif de commande de bloquage manuel d'une soupape, en particulier d'une soupape de frein de stationnement d'un véhicule commercial

(30) Priorität: 22.02.2000 DE 10008038
(43) Veröffentlichungstag der Anmeldung: 12.09.2001
(73) Patentinhaber: KNORR-BREMSE Systeme für Nutzfahrzeuge GmbH, 80809 München (DE)
(72) Erfinder: Harkai, Joszef, 600 Kecskemét (HU); Gaspar, Mihály, 4804 Vásárosnamény (HU)
(74) Vertreter: Schumacher & Willsau

(56) Entgegenhaltungen:
- EP-A- 0 544 104
- DE-A- 3 015 185
- DE-C2- 3 005 490
- DE-C2- 3 703 536
- US-A- 3 714 802
- US-A- 5 560 233

## Beschreibung

Die Erfindung betrifft eine Sperreinrichtung nach dem Gattungsbegriff des Patentanspruchs 1.

Bei Anhängefahrzeugen herkömmlicher Bauart sind mechanische Feststellbremsen bekannt, welche in der Regel mittels einer Kurbel oder eines Handbremshebels mit Rastierung betätigbar sind. Durch einfache mechanische Maßnahmen können derartige Feststellbremsen abgesichert werden. In zunehmenden Maße werden in Anhängerbremsanlagen von Nutzfahrzeugen auch Federspeicher eingesetzt, welche die Aufgabe der rein mechanisch wirkenden, herkömmlichen Feststellbremseinrichtungen übernehmen. Zur Betätigung der Feststell- bzw. Federspeicherbremsanlagen ist ein Parkventil vorgesehen; diese Parkventile können in Kombination mit Ventileinrichtungen verwendet werden, welche ein Notbremsventil und ein Löseventil enthalten, sie sind jedoch auch in Alleinstellung, in der Verbindung zum Federspeicherbremszylinder befindlich, verwendbar. Um unbefugtes Betätigen derartiger Parkventile zu verhindern, wurden bereits Lösungen vorgeschlagen (EP 0 544 104 A1), bei welchen der manuell betätigbare Schieber bzw. Steuerkolben des Parkventils durch einen durch Federkraft verspannten Sperrbolzen, durch federverspannte Sperrkugeln, durch Vorsteckfedern oder durch ein mit einem Schlüssel verriegelbares Schloss gegen unbefugtes Betätigen gesichert wird. Diese Maßnahmen sind jedoch nicht als ausreichend zuverlässig anzusehen; bei Verwendung einfacher, federverspannter Sperrelemente ist es auch für Ungeübte ohne Weiteres möglich, eine Entriegelung durch Ziehen am Betätigungsknopf zu erreichen. Auch ist eine effektive Einhandbetätigung im Allgemeinen nicht möglich, vor allem bei Verwendung von Steckfedern oder bei der Notwendigkeit zusätzlicher Absicherung mittels eines Schlosses.

Die DE 3703536 C2 offenbart eine Sperreinrichtung gemäß dem Oberbegriff des Anspruchs 1.

Davon ausgehend besteht die Aufgabe der Erfindung darin, ein Sperreinrichtung für handbetätigbare Ventile zu schaffen, welche im engeren Sinne als einhandbetätigbar anzusehen sind und welche es dem Unbefugten dennoch nicht ohne weiteres gestatten, eine zur Entriegelung erforderliche Manipulation vorzunehmen. Im Besonderen bei Feststellbremsanlagen für Anhängefahrzeuge soll hierdurch verhindert werden, dass eine Belüftung der Federspeicher, also ein Lösen der Bremse eines abgestellten Anhängefahrzeuges vollziehbar ist.

Zur Lösung dieser Aufgabe dienen die Merkmale nach dem Kennzeichnungsteil des Patentanspruchs 1.

Die Sperreinrichtung von baulich einfacher Konstruktion ist so ausgebildet, dass sie bei Einhandbetätigung nur durch Befugte, d. h. mit dem Sperrmechanismus vertraute Personen betätigbar ist. Hierzu ist die Sperreinrichtung mit einer Sperr- und Lösehülse versehen, welche im Zusammenwirken mit der Betätigung des eigentlichen Betätigungsknopfes eine gezielte Freigabe der Verriegelung zum Zwecke nachfolgender Betätigung durch den Betätigungsknopf ermöglicht. Es sind keine zusätzlichen Sicherungselemente notwendig, welche verloren gehen könnten oder einer Einhandbetätigung nicht zugängig sind. Die zur Verfügung stehende Federkraft, welche zwischen Sperr- und Lösehülse einerseits und Betätigungsknopf andererseits wirkt, ist ausreichend groß, um in Sperrposition ein sicheres Verriegeln des Ventilschiebers zu gewährleisten, andererseits ist die Einhandbetätigung zum Zwecke der Entriegelung mit ausreichender Sicherheit möglich.

Vorteilhafte Ausgestaltungen und Weiterbildungen sind in weiteren Patentansprüchen aufgeführt. Die Erfindung ist nachfolgend anhand eines Ausführungsbeispiels unter Bezugnahme auf die beigefügte Zeichnung erläutert.
- Figur 1: ist eine Schnittansicht der erfindungsgemäßen Sperreinrichtung für handbetätigbare Ventile, in Sperrlage derselben;
- Figur 2: ist eine der Figur 1 vergleichbare Schnittansicht unter Darstellung des Eintritts der Entriegelung;
- Figur 3: ist eine der Figur 1 und der Figur 2 vergleichbare Schnittansicht unter Darstellung einer Zwischenposition des Schiebers zwischen zwei Verriegelungsstellungen (Verriegelungsstellung I und II); und
- Figur 4: ist eine den Figuren 1 - 3 vergleichbare Schnittansicht unter Darstellung der Verriegelungsstellung II bei ausgefahrenem Schieber des Ventils.

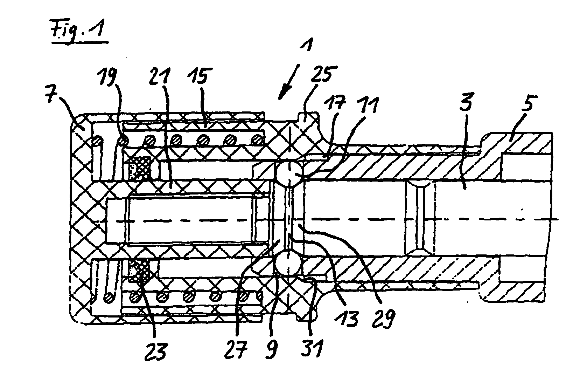

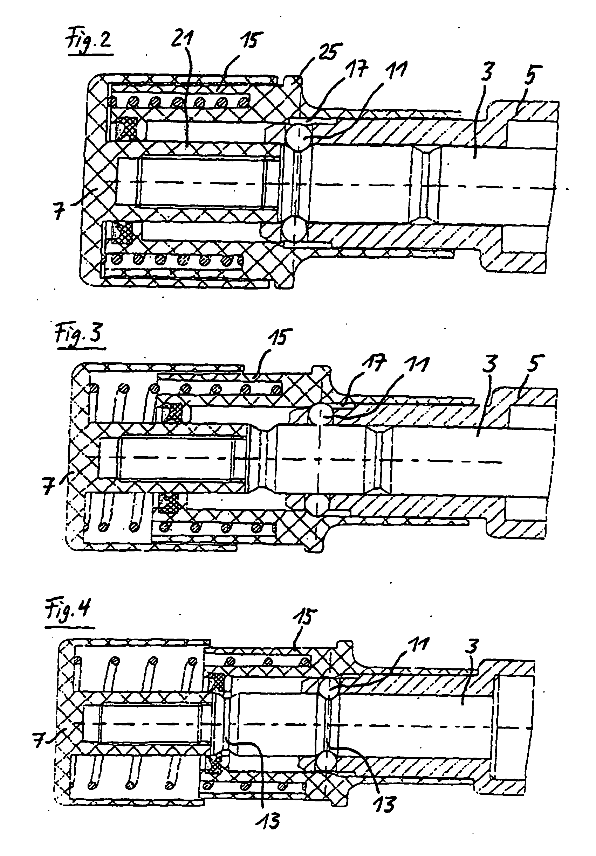

In Fig. 1 der Zeichnung ist eine Sperreinrichtung 1 nach der Erfindung in beispielhafter Anwendung an einem Schieber 3 eines Parkventils eines Anhängefahrzeugs dargestellt. Als Bestandteil des Parkventils ist in Teilschnittansicht ein Gehäuse 5 wiedergegeben, in welchem der Schieber 3 mittels eines mit ihm verbundenen Betätigungsknopfs 7 verschiebbar ist. Der Schieber ist in nachfolgend erläuterter Weise zwischen der in Fig. 1 und der in Fig. 4 dargestellten Position verschiebbar und in den Stellungen nach Fig. 1 und 4 mittels der erfindungsgemäßen Sperreinrichtung arretierbar, d. h. gegenüber unbeabsichtigte Betätigung bzw. gegenüber unbefugte Manipulationen durch Dritte blockierbar.

An dem in Fig. 1 linken Ende des Gehäuses 5 befindet sich wenigstens eine Durchbrechung 9 in Form einer Bohrung, welche zur Aufnahme eines Verriegelungsglieds 11 dient. Im dargestellten Ausführungsbeispiel sind zwei derartige Durchbrechungen 9 und zwei Verriegelungsglieder 11 vorgesehen. Die Verriegelungsglieder sind als Kugeln wiedergegeben; es können auch Verriegelungsglieder anderer Konfiguration verwendet werden, welche dem gewünschten Effekt der Verriegelung und Entriegelung zugängig sind. Die Verriegelungsglieder wirken innenseitig, d. h. dem Schieber 3 zugewandt, gegenüber Sperrnuten 13, welche unter axialem Abstand zueinander am Außenumfang des Schiebers 3 eingefräst sind. An ihrem Außenumfang sind die Verriegelungsglieder 11 durch eine Sperr- und Lösehülse 15 umgeben, welche auf dem Gehäuse 5 verschiebbar ist und am in Fig. 1 linken Ende in den Betätigungsknopf 7 eintaucht. Am Innenumfang der Sperr- und Lösehülse ist in Form einer Hinterschneidung eine Lösenut 17 vorgesehen. Gegenüber dem mit dem Schieber 3 beispielsweise mittels Verschraubung verbundenen Betätigungsknopf 7 ist die Sperrund Lösehülse 15 durch eine Feder 19 verspannt. Die Feder 19 besitzt folglich die Neigung, den Betätigungsknopf 7 bei entriegelter Sperreinrichtung gegenüber der Sperr- und Lösehülse in die in Fig. 3 und 4 dargestellte Position auszufahren, wie nachfolgend erläutert.

Die Feder 19 stützt sich unter weitgehendem Schutz gegenüber Verunreinigungen im Inneren des Betätigungsknopfes 7 bzw. der Sperr- und Lösehülse 15 ab; die Sperrund Lösehülse 15 ihrerseits trägt an ihrem Innenumfang eine gegenüber dem Außenumfang des Schafts 21 des Betätigungsknopfes 7 wirkende Dichtung 23, welche das Eindringen von Verunreinigungen in das Innere der Sperreinrichtung vollständig verhindert.

Um die nachfolgend erläuterte Betätigung, d. h. Verschiebung der Sperr- und Lösehülse 15 auf manuelle Weise zu ermöglichen, ist am Außenumfang derselben ein Bund 25 vorgesehen. Der Bund 25 wird bei Einhandbetätigung des Betätigungsknopfes 7 Mittelfinger und Zeigefinger der Hand ergriffen, während der Handballen bzw. Daumen als Gegenreaktion gegenüber dem Betätigungsknopf 7 einwirkt, d. h., dass Sperr- und Lösehülse 15 und Betätigungsknopf 7 zum Zwecke der Sperrung oder Entriegelung relativ zueinander verschiebbar sind.

Bei der Relativverschiebung der Sperr- und Lösehülse 15 gegenüber dem Gehäuse 5 gelangen die Verriegelungsglieder 11, ausgehend von der in Fig. 1 bzw. 4 dargestellten Lage in die Lösenut 17, derart, dass die Sperrung des Schiebers 3 freigegeben ist und diese aus der Position nach Fig. 1 herausgezogen oder aus der Position nach Fig. 4 eingeschoben werden kann. Das Verlagern der Verriegelungsglieder 11, also das Herausheben in Richtung der Lösenut 17, ist bei Verschiebung des Schiebers 3 auf die Wirkung der Winkelflächen 27 und 29 der Sperrnut(en) zurückzuführen, da diese Winkelflächen bei Verschiebung des Schiebers eine radial nach außen gerichtete Kraft auf die Verriegelungsglieder 11 ausüben, so dass diese bei Freigabe in die Lösenut 17 einzutauchen vermögen. Ausgehend von der Position nach Fig. 1 geschieht dies entlang einer weiteren Winkelfläche 31, welche am linksseitigen Ende der Lösenut 17 ausgebildet ist.

Die Wirkungsweise der Sperreinrichtung mit Einhandbetätigung vorstehend erläuterter Konstruktion ist wie folgt:

In Fig. 1 und Fig. 4 der Zeichnung sind die Verriegelungsstellungen I und II des Schiebers bzw. Betätigungsknopfes 7 dargestellt, d. h. in dieser Lage ist ein Ausfahren (Fig. 1) oder ein Einfahren (Fig. 4) des Schiebers 3 und des mit ihm verbundenen Betätigungsknopfes 7 nicht möglich, da die Verriegelungsglieder 11 in die Sperrnut 13 eingreifen und hierdurch ein weiteres Verschieben des Schiebers nicht möglich ist. Sollten Unbefugte am Betätigungsknopf 7 ziehen oder diesen drücken, so führt dies nicht zu einer Entriegelung, da die Sperr- und Lösehülse 15 unbetätigt bleibt. Auch ein unbeabsichtiges Betätigen ist auf diese Weise ausgeschlossen. Es bedarf der Kenntnis über das Zusammenwirken zwischen Sperr- und Lösehülse 15 und Betätigungsknopf 7, um die Entriegelung und die sich daran anschließende Verschiebung des Schiebers 3 mittels des Betätigungsknopfes 7 vollziehen zu können.

Ausgehend von der Verriegelungsstellung I nach Fig. 1 wird bei Betätigung durch Befugte, also durch den Fahrer des Nutzfahrzeugs, in Kenntnis der Wirkungsweise der Entriegelung der Bund 25 der Sperr- und Lösehülse 15 zwischen Zeige- und Mittelfinger der Hand ergriffen, wobei infolge der Einhandbetätigung der Betätigungsknopf 7 durch den Handballen bzw. den Daumen gegengehalten wird. Durch Zug am Bund 25 gegen die Kraft der Feder 19 erfolgt eine Relativverschiebung der Sperrund Lösehülse 15 gegenüber dem Schieber 3 als auch gegenüber dem gegengehaltenen Betätigungsknopf 7, mit der Folge, dass die Verriegelungsglieder 11 die in Fig. 2 dargestellte Relativlage einnehmen. Nachdem bei der vorstehend erläuterten Betätigung gleichzeitig der Betätigungsknopf 7 freigegeben, also der Druck durch den Handballen oder den Daumen gelöst wird, verlagert sich der Betätigungsknopf 7 unter Einwirkung der Feder 19 unmittelbar in die in Fig. 3 dargestellte Zwischenlage und aus dieser in die in Fig. 4 wiedergegebene Verriegelungsstellung II, in welcher die Verriegelungsglieder unter Einwirkung der Winkelfläche 31 in die zweite Sperrnut 13 eintauchen. In dieser zweiten Endposition ist eine Betätigung durch Unbefugte verhindert, da eine Betätigung des Betätigungsknopfes 7 alleine nicht ausreicht, die Verriegelung in der Position nach Fig. 4 zu lösen. Es ist wiederum nötig, den Bund 25 der Sperr- und Lösehülse 15 vorzugsweise zwischen Mittel- und Zeigefinger zu ergreifen und bei Gegenhalten des Betätigungsknopfes 7 einen gemäß Fig. 4 nach links gerichteten Zug auszuüben, derart, dass die Verriegelungsglieder 11 wiederum in die Lösenut 17 nach außen gleiten, wenn gleichzeitig der Schieber 3 durch Betätigen des gegengehaltenen Betätigungsknopfes 7 in der Darstellung nach Fig. 4 nach rechts gerichtet verschoben wird, um ausgehend von der Position nach Fig. 4 wiederum die Zwischenposition nach Fig. 3 und schließlich die Sperrstellung I nach Fig. 1 zu erreichen.

Mit Hilfe der vorstehend erläuteren Sperreinrichtung ist es demnach möglich, die zwei Verriegelungsstellungen I und II so zu fixieren, dass eine Betätigung durch Unbefugte nicht ermöglicht oder zumindest so weit erschwert wird, dass mit einer gezielten Betätigung nicht gerechnet werden kann. Dies stellt einen wesentlichen Sicherheitsfaktor bei Ventilen dar, welche in Bremsanlagen für Nutzfahrzeuge verwendet werden, so z. B. bei Verwendung an einer Feststellbremse eines Anhängers. Bei derartigen Anlagen entspricht die ausgefahrene Position des Betätigungsknopfes 7 im Allgemeinen der Parkposition, welche im gekuppelten oder im abgekuppelten Zustand des Anhängers bestehen kann und eine Entlüftung des Federspeicherzylinders der Feststellbremse zur Folge hat. In dieser Feststellbrems-Position ist der Anhänger gegen Verschieben abgesichert und durch die erfindungsgemäße Sperreinrichtung wird verhindert, dass Unbefugte den Betätigungsknopf 7 manipulieren, d. h. ihn in die eingefahrene Position schieben können, in welcher ein Belüften des Federspeicherzylinders der Feststellbremsanlage, also ein Lösen der Feststellbremse, verursacht werden könnte.

### Bezugszeichenliste

- 1 =: Sperreinrichtung
- 3 =: Schieber
- 5 =: Gehäuse
- 7 =: Betätigungsknopf
- 9 =: Durchbrechung
- 11 =: Verriegelungsglied
- 13 =: Sperrnut
- 15 =: Sperr- und Lösehülse
- 17 =: Lösenut
- 19 =: Feder
- 21 =: Schaft
- 23 =: Dichtung
- 25 =: Bund
- 27 =: Winkelfläche
- 29 =: Winkelfläche
- 31 =: Winkelfläche

## Patentansprüche

1. Sperreinrichtung für handbetätigbare Ventile, insbesondere für Ventile von Feststellbremsen in Nutzfahrzeugen, mit einem durch einen Betätigungsknopf betätigbaren, auf Ventilorgane einwirkenden Schieber mit wenigstens einer verriegelbaren Endposition, mit den folgenden Merkmalen:
a) dem mit dem Schieber (3) verbundenen Betätigungsknopf (7) des Ventils ist eine relativ zu ihm verschiebbare Sperr- und Lösehülse (15) zugeordnet;
b) die Sperr- und Lösehülse (15) umschließt an einem ortsfesten Teil (Gehäuse 5) geführte Verriegelungsglieder (11);
c) die Verriegelungsglieder (11) wirken unter Betätigung durch die relativ zum Betätigungsknopf verschiebbare Sperr- und Lösehülse (15) gegenüber am Außenumfang des Schiebers (3) befindlichen Sperrprofilen; und
d) die Verriegelungsglieder (11) sind durch am Innenumfang der Sperr- und Lösehülse befindliche Profile in Sperr- bzw Löseposition gegenüber dem Schieber (3) verlagerbar; **gekennzeichnet durch** die folgenden Merkmale:
e) am Außenumfang des Schiebers ist wenigstens eine zur Aufnahme der Verriegelungsglieder (11) in Sperrstellung dienende Spermut (13) als Sperrprofil vorgesehen; und
f) die Sperr- und Lösehülse (15) ist gegenüber dem am Ende des Schiebers (3) befestigten Betätigungsknopf (7) **durch** eine Feder (19) verspannt.

2. Sperreinrichtung nach Anspruch 1, **gekennzeichnet durch** folgende Merkmale:
a) am Innenumfang der Sperr- und Lösehülse (15) ist eine Ausnehmung in Form einer Lösenut (17) vorgesehen, welche bei axialer Deckung mit den Verriegelungsgliedern (11) diese zum Zwecke der Freigabe der Verriegelung aufzunehmen vermag; und
b) die Verriegelungsglieder (11) sind in Durchbrechungen (9) des vom Schieber durchsetzten ortsfesten Teils (Gehäuse 5) geführt, derart, dass sie bei Deckung mit der Lösenut aus ihrer Verriegelungsposition in der Sperrnut (13) des Schiebers in die Lösenut (17) verlagerbar sind.

3. Sperreinrichtung nach einem der vorangehenden Ansprüche, **gekennzeichnet durch** folgende Merkmale:
a) die Sperr- und Lösehülse (15) umschließt relatiwerschieblich den ortsfesten Teil (Gehäuse 5) des Ventils und greift mittels eines endseitigen Ansatzes in eine Ausnehmung des Betätigungsknopfes (7) ein;
b) die den Betätigungsknopf (7) und die Sperr- und Lösehülse gegenseitig verspannende Feder (19) stützt sich innenseitig sowohl am Betätigungsknopf (7) als auch an der Sperr- und Lösehülse (15) ab; und
c) die Sperr- und Lösehülse (15) ist an ihrem Innenumfang mittels einer Dichtung (23) verschiebbar gegenüber dem Außenumfang eines mit dem Schieber (3) verbundenen Schafts (21) des Betätigungsknopfes (7) geführt.

4. Sperreinrichtung nach einem der vorangehenden Ansprüche, **dadurch gekennzeichnet, dass** die Sperr- und Lösehülse (15) an ihrem Außenumfang einen bei Einhandbetätigung ergreifbaren Bund (25) trägt, derart, dass die Sperr- und Lösehülse (15) bei gegengehaltenem Betätigungsknopf (7) zum Zwecke der Entriegelung in diesen gegen die Kraft der Feder (19) einziehbar ist.

5. Sperreinrichtung nach einem der vorangehenden Ansprüche, **dadurch gekennzeichnet, dass** die Sperr- und Lösehülse (15) am bezüglich des Betätigungsknopfes (7) entgegengesetzten Ende unter Verspannung durch die Feder (19) an einen Anschlag des ortsfesten Teils (Gehäuse 5) anlegbar ist.

6. Sperreinrichtung nach einem der vorangehenden Ansprüche, **gekennzeichnet durch** zwei am Außenumfang des Schiebers unter axialem Abstand befindliche Sperrnuten (13) zur Festlegung zweier Verriegelungsstellungen (I und II).

7. Sperreinrichtung nach einem der vorangehenden Ansprüche, **gekennzeichnet durch** ihre Verwendung an einem Parkventil eines Nutzfahrzeugs.

8. Sperreinrichtung nach Anspruch 7, **gekennzeichnet durch** die Verwendung an einem von einem Zugfahrzeug abkuppelbaren Anhängefahrzeug.

## Claims

1. Locking device for manually operable valves, particularly for valves in parking brakes on commercial vehicles, comprising a slide operable by means of an operating button and acting upon valve actuators, which presents at least one lockable terminal position, with the following features:
(a) a locking and unlocking sleeve (15) is associated with said operating button (7) of the valve, which is connected to said slide (3), and is displaceable relative to said button;
(b) said locking and unlocking sleeve (15) encloses locking elements (11) guided on a stationary part (housing 5); and
(c) when operated by said locking and unlocking sleeve (15) displaceable relative so said operating button, said locking elements (11) are operative relative to locking profiles provided on the outer periphery of said slide (3); and
(d) said locking elements (11) are displaceable relative to said slide (3) by means of profiles provided on the inner periphery of said locking and unlocking sleeve in a locking or unlocking position; **characterised by** the following features:
(e) at least one locking groove (13) serving to accommodate said locking elements (11) in the locking position is provided on the outer periphery of said slide as said locking profile; and
(f) said locking and unlocking sleeve (15) is biased by means of a spring (19) relative to said operating button (7) fastened on the end of said slide (3).

2. Locking device according to Claim 1, **characterised by** the following features:
(a) a recess is provided in the form of an unlocking groove (17) on the inner periphery of said locking and unlocking sleeve (15), which, when registered with said locking elements (11), is capable of receiving these elements for the purpose of releasing the locking mechanism; and
(b) said locking elements (11) are guided in break-through passages (9) of the stationary part (housing 5) through which said slide passes, in such a way that when they are registered with said locking groove, said elements are displaceable out of their locking position in said locking groove (13) of said slide into said unlocking groove (17).

3. Locking device according to any of the preceding Claims, **characterised by** the following features:
(a) said locking and unlocking sleeve (15) encloses said stationary part (housing 5) of the valve for relative displacement and engages in a recess of said operating button (7) by a lug on the terminal side;
(b) said spring (19) biasing said operating button (7) and said locking and unlocking sleeve one relative to the other is supported on the inner side on both the operating button (7) and said locking and locking and unlocking sleeve (15); and
(c) said locking and unlocking sleeve (15) is guided on its inner periphery by means of a seal (23) for displacement relative to the outer periphery of a shaft (21) of said operating button (7), which is connected to said slide (3).

4. Locking device according to any of the preceding Claims, **characterised in that** said locking and unlocking sleeve (15) carries a collar (25) on its outer periphery, which is adapted to be seized in the case of single-handed operation, in such a way that when said operating button (7) is held against it, said locking and unlocking sleeve (15) can be retracted into the latter against the force exerted by said spring (19) for the purpose of unlocking.

5. Locking device according to any of the preceding Claims, **characterised in that** said locking and unlocking sleeve (15) can be caused to bear against on a stop on said stationary part (housing 5) on the end opposite relative to said operating button (7), while being biased by said spring (19).

6. Locking device according to any of the preceding Claims, **characterised by** two locking grooves (13) provided on the outer periphery of said slide at an axial spacing therefrom for determining two locking positions (I and II).

7. Locking device according to any of the preceding Claims, **characterised by** its application on a parking brake valve on a commercial vehicle.

8. Locking device according to Claim 7, **characterised by** the application on a trailer vehicle adapted to be decoupled from a tractor vehicle.

## Revendications

1. Dispositif de blocage de soupapes pouvant être actionnées à la main, notamment de soupapes de frein de stationnement, de véhicules utilitaires, comprenant un tiroir qui peut être actionné par un bouton de commande qui agit sur des organes de soupape et qui a au moins une position d'extrémité verrouillable, avec les caractéristiques suivantes:
a) il est associé au bouton (7) de commande de la soupape, qui est relié au tiroir (3), une douille (15) de blocage et de desserrage qui peut coulisser par rapport à lui;
b) la douille (15) de blocage et de desserrage entoure des organes (11) de verrouillage guidés sur une partie fixe (boîtier 5);
c) les organes (11) de verrouillage agissent vis-à-vis des profils de blocage se trouvant sur le pourtour extérieur du tiroir (3) par actionnement de la douille (15) de blocage et de desserrage qui peut coulisser par rapport au bouton de commande;
d) les organes (11) de verrouillage peuvent être déplacés par rapport au tiroir (3) pour venir en position de blocage ou de desserrage par des profilés se trouvant sur le pourtour intérieur de la douille de blocage et de desserrage;
e) il est prévu sur le pourtour extérieur du tiroir, comme profil de blocage, au moins une gorge (13) de blocage servant à la réception des organes (11) de verrouillage dans la position de blocage; et
f) la douille (15) de blocage et de desserrage est bloquée, par rapport au bouton (7) de commande fixé à l'extrémité du tiroir (3), par un ressort (19).

2. Dispositif de blocage suivant la revendication 1, **caractérisé par** les caractéristiques suivantes:
a) il est prévu sur le pourtour intérieur de la douille (15) de blocage et de desserrage, un évidemment sous la forme d'une gorge (17) de desserrage qui, lorsqu'elle est en coïncidence axiale avec les organes (11) de verrouillage, peut les recevoir à des fins de déverrouillage;
b) les organes (11) de verrouillage sont guidés dans des traversées (9) de la partie (boîtier 5) fixe dans laquelle passe le tiroir de façon à ce que, lorsqu'il y a coïncidence avec la gorge de desserrage, ils peuvent passer, de leur position de verrouillage dans la gorge (13) de blocage du tiroir, dans la gorge (17) de desserrage.

3. Dispositif de blocage suivant l'une des revendications précédentes, **caractérisé par** les caractéristiques suivantes:
a) la douille (15) de blocage et de desserrage entoure, avec possibilité de coulissement relatif, la partie fixe (boîtier 5) de la soupape et pénètre, au moyen d'un prolongement du côté de l'extrémité, dans un évidement du bouton (7) de commande;
b) le ressort (19), bloquant mutuellement le bouton (7) de commande et la douille de blocage et de desserrage, s'appuie du côté intérieur à la fois sur le bouton (7) de commande et sur la douille (15) de blocage et de desserrage;
c) la douille (15) de blocage et de desserrage peut coulisser par son pourtour intérieur au moyen d'une garniture (23) d'étanchéité par rapport au pourtour extérieur d'un fût (21) du bouton (7) de commande, qui est relié au tiroir (3).

4. Dispositif de blocage suivant l'une des revendications précédentes, **caractérisé en ce que** la douille (15) de blocage et de desserrage porte sur son pourtour extérieur un collier (25) qui peut être saisi pour un actionnement à une main de sorte que la douille (15) de blocage et de desserrage peut être tirée, alors que le bouton (7) de commande est maintenu, de manière à s'opposer, dans ce bouton à l'encontre de la force du ressort (19) en vue du déverrouillage.

5. Dispositif de blocage suivant l'une des revendications précédentes, **caractérisé en ce que** la douille (15) de blocage et de desserrage peut s'appliquer, par l'extrémité opposée au bouton (7) de commande, en étant bloquée par le ressort (19), sur une butée de la partie (boîtier 5) fixe.

6. Dispositif de blocage suivant l'une des revendications précédentes, **caractérisé par** deux gorges (13) de blocage se trouvant à distance axiale sur le pourtour extérieur du tiroir et destinées à fixer deux positions (I, II) de verrouillage.

7. Dispositif suivant l'une des revendications précédentes, **caractérisé par** son utilisation dans une soupape de stationnement d'un véhicule utilitaire.

8. Dispositif de blocage suivant la revendication 7, **caractérisé par** l'utilisation sur une remorque pouvant être dételée d'un véhicule de traction.
